# FASCICULE DE BREVET EUROPEEN

(11) **EP 0 488 870 B1**
(45) Date de publication et mention de la délivrance du brevet: **29.01.1997**
(21) Numéro de dépôt: 91403176.0
(22) Date de dépôt: 25.11.1991
(51) Int. Cl.: B32B 31/20, B29C 70/68, B29C 70/04, B32B 27/02, B32B 27/06, B32B 27/32, B32B 5/12, D04H 3/04

(54) **Procédé et machine pour la fabrication d'une feuille complexe étanche de forme quelconque, comportant une armature interne.**
Verfahren und Vorrichtung zur Herstellung von einem intern armierten und undurchlässigen Verbundwerkstoff.
Method and apparatus for the production of an internally reinforced, impervious, composite sheet.

(30) Priorité: 26.11.1990 FR 9014745
(43) Date de publication de la demande: 03.06.1992
(73) Titulaire: AEROSPATIALE Société Nationale Industrielle, 75781 Paris Cédex 16 (FR)
(72) Inventeur: Montagne, Marc Henri, F-33700 Merignac (FR); Regipa, Olivier, F-31400 Toulouse (FR)
(74) Mandataire: Poulin, Gérard

(56) Documents cités:
- EP-A- 0 118 628
- EP-A- 0 151 501
- EP-A- 0 261 246
- DE-A- 3 726 827
- DE-A- 3 821 172
- FR-A- 2 306 063
- US-A- 3 535 180
- US-A- 3 687 764

## Description

L'invention concerne un procédé de fabrication d'une feuille complexe étanche, de forme quelconque, comportant une armature interne formée, par exemple, de fils thermosoudables tels que des fils de polyéthylène haute ténacité, ainsi que deux films de recouvrement assurant l'étanchéité de la feuille et réalisés en un matériau fusible tel que du polyéthylène. L'invention concerne également une machine mettant en oeuvre ce procédé.

Dans des domaines techniques très variés, on utilise des enveloppes ou panneaux étanches dont la structure doit pouvoir résister à des efforts qui peuvent, dans certains cas, être très importants. Parmi ces domaines, on citera notamment celui des ballons aérostatiques, celui des structures architecturales souples, celui des parachutes et celui des voiles. Une enveloppe ou un panneau est généralement obtenu en assemblant plusieurs complexes étanches.

Pour obtenir de bonnes qualités de résistance mécanique, on a envisagé de fabriquer les complexes en plaçant une armature tissée entre deux films d'un matériau fusible tel que du polyéthylène. Pour réaliser l'armature tissée, on dispose de fils de polyéthylène haute ténacité tels que des fils HP-PE-Dyneema SK60 (marque déposée), qui présentent des performances de ténacité sans comparaison actuellement.

Lorsque l'on désire réaliser un tel complexe étanche, on place l'armature tissée entre deux films de polyéthylène de faible épaisseur et on dispose l'ensemble dans une presse chauffante, afin de réaliser le "complexage" de cet ensemble. Cependant, la force appliquée par la presse sur l'empilement ainsi constitué se traduit par un effet de poinçon dans chacune des zones où des petites surfaces de l'armature tissée sont en contact avec le plan des films de recouvrement. Cet effet de poinçon, qui a pour origine l'entrelacement des fils de chaîne et des fils de trame de l'armature tissée, conduit, à température élevée, à l'apparition de lignes de fuite au voisinage des zones précitées.

Pour obtenir un complexe étanche, il est a lors nécessaire de mettre en place sur chacune des faces du complexe un deuxième film de polyéthylène. Cependant, si cette solution procure bien l'étanchéité désirée, elle conduit à compliquer la fabrication du complexe et à en accroître la masse et le coût de manière indésirable.

Par ailleurs, la reprise des contraintes sur les bords des complexes réalisés selon les techniques classiques, par exemple lors de l'assemblage bord à bord de plusieurs complexes, dans le but de réaliser une enveloppe ou un panneau étanche, pose toujours des problèmes très difficiles à résoudre. Ces problèmes sont encore compliqués lorsque les complexes à réaliser ne sont pas rectangulaires.

De plus, les complexes obtenus par les techniques actuelles sont de structure régulière ou homogène, et se présentent sous forme de bandes de largeur constante. Les feuilles de forme non rectangulaire sont découpées dans ces bandes. Dans tous les cas, ces techniques conduisent, lorsque le complexe est soumis à des efforts non réguliers ou non homogènes, à en accroître considérablement la masse car on prend a lors comme critère de dimensionnement la contrainte maximale au lieu du champ de contrainte local.

Le document EP-A-0 118 628 décrit une machine permettant de fabriquer un complexe étanche formé de fils de chaîne et de trame croisés, placés entre deux films de recouvrement en matière plastique extrudée. Un fil de trame unique formant des boucles sur les bords du complexe est utilisé. L'opération de complexage est assuré par le passage des différents éléments entre deux rouleaux chauffants.

Le document US-A-3 687 764 décrit également la fabrication d'un complexe étanche comprenant une âme formée de fils tissés ou non, assemblés pour former un réseau maillé, et deux feuilles de matière plastique placées de part et d'autre de cette âme. Avant d'être appliquées contre les fils formant l'âme du complexe étanche par des rouleaux chauffants, les feuilles sont préchauffées par des rouleaux de préchauffage à une température inférieure à celle des rouleaux chauffants.

L'invention a principalement pour objet un nouveau procédé de fabrication d'un complexe étanche, optimisé en forme et en contraintes, comportant une armature interne, permettant d'obtenir l'étanchéité désirée sans qu'il soit nécessaire de mettre en place un deuxième film de polyéthylène sur chacune des faces du complexe, afin de réduire le temps de fabrication et le coût de ce complexe.

L'invention a aussi pour objet un procédé permettant de fabriquer un complexe étanche, de forme rectangulaire ou non, dont les bords assurent sans difficulté la reprise optimisée des contraintes.

L'invention a encore pour objet une machine mettant en oeuvre ce procédé, ainsi qu'un complexe étanche obtenu par ce procédé.

Conformément à l'invention, il est proposé à cet effet un procédé de fabrication d'un complexe étanche comportant une armature interne, et deux films de recouvrement de ladite armature, comprenant les étapes suivantes :
- réalisation d'une armature non tissée formée de fils de chaîne et de fils de trame disposés sur deux couches juxtaposées, à la manière d'une grille ;
- application des films de recouvrement contre l'armature non tissée, avec une force prédéterminée et à une température de complexage ;
caractérisé par le fait que l'étape d'application des films de recouvrement contre l'armature est précédée d'une étape de préchauffage des films de recouvrement à une température de thermo-assemblage, ladite force prédéterminée étant choisie afin que les films de recouvrement pénètrent entre les fils de chaîne et les fils de trame, sans être complètement traversés par ces fils, et la température de complexage étant inférieure à la température de thermo-assemblage et au plus égale à une température maximum supportée par les fils, afin qu'ils conservent leurs performances de ténacité.

La température de thermo-assemblage est, par exemple, la température de fusion pâteuse, dans le cas des matériaux fusibles tels que le polyéthylène, la température de thermo-collage, dans le cas d'utilisation de colles thermiquement réactivables telles que des colles polyester, par exemple, les colles GTS 100 ou 300, (marque déposée) ou la température d'évaporation, dans le cas d'utilisation de colles classiques à deux composants, type col les époxy.

Le complexe obtenu par ce procédé comporte une armature non tissée dont les fils de chaîne et de trame sont simplement croisés pour former une grille sans aucun entrelacement. Lorsqu'on effectue le complexage de l'ensemble, la surface d'appui des films de recouvrement sur l'armature est donc importante. Par conséquent, à égalité de température, de pression et de durée d'application des films contre l'armature, la pénétration des films est plus faible que pour une armature tissée équivalente, de sorte que le complexe obtenu est étanche.

Selon un mode de réalisation préféré de l'invention, on réalise l'armature non tissée en effectuant successivement une opération de tramage au moyen d'un fil de trame continu et une opération de chaînage au moyen d'un fil de chaîne continu, de façon à former des bouclettes de reprise de contraintes sur deux bords latéraux de la grille, à l'aide du fil de trame, et sur deux bords d'extrémité de la grille, à l'aide du fil de chaîne.

Avantageusement, on passe dans les bouclettes de reprise de contraintes situées sur chacun des bords latéraux et sur chacun des bords d'extrémité un câble de liaison du complexe à une structure voisine, et les films de recouvrement ne sont pas appliqués sur ces câbles de liaison. Ces caractéristiques permettent, par exemple par couture bord à bord de deux complexes ainsi réalisés, d'assurer la reprise des contraintes, sensiblement sans discontinuité mécanique, quelle que soit la forme de ces complexes. Bien entendu, l'étanchéité est alors préservée en recouvrant la zone d'assemblage (couture) d'un ruban thermo-assemblé aux deux complexes, par lequel ne transitent pas les contraintes de structure reprises par les fibres.

Il est à noter que le procédé selon l'invention permet de réaliser des complexes dont la densité de répartition et l'orientation des fils de renforcement sont organisées de façon à optimiser la tenue des contraintes de la structure, selon une loi prédéterminée qui dépend de l'utilisation ultérieure des complexes.

Lorsqu'on désire réaliser un complexe non rectangulaire, on effectue l'opération de tramage en accrochant le fil de trame continu sur des organes d'accrochage latéraux répartis le long des bords latéraux de la grille ; puis on effectue l'opération de chaînage en accrochant le fil de chaîne continu sur des organes d'accrochage d'extrémité répartis transversalement sur une largeur égale à la largeur d'un segment transversal de plus grande largeur du complexe à réaliser, la distance entre ce segment transversal et chacun des organes d'accrochage d'extrémité étant modulée afin d'être égale à la longueur finale du brin correspondant du fil de chaîne, dans le complexe à réaliser ; puis on bloque les brins du fil de chaîne sur ledit segment transversal de plus grande largeur et on donne à une première extrémité de la grille sa largeur définitive, en maintenant les brins en tension entre cette première extrémité et ledit segment transversal ; puis on relâche les brins du fil de chaîne sur le segment transversal ; enfin, on applique les films de recouvrement tout en modulant l'écartement des brins des fils de chaîne, à partir de la première extrémité, et en maintenant ces brins en tension.

Selon un deuxième mode de réalisation de l'invention, on réalise l'armature non tissée en effectuant une opération de tramage au moyen d'un fil de trame continu, puis une opération de chaînage au moyen de fils de chaîne distincts, l'opération de chaînage et l'application des films de recouvrement étant réalisées simultanément en continu, et l'opération de tramage formant des bouclettes de reprise de contraintes sur deux bords latéraux de la grille, à l'aide du fil de trame.

Enfin, selon un troisième mode de réalisation de l'invention, on effectue simultanément en continu la réalisation de l'armature non tissée, le préchauffage et l'application des films de recouvrement, l'armature non tissée étant obtenue en effectuant en continu une opération de chaînage et une opération de tramage.

L'invention a aussi pour objet une machine de fabrication d'un complexe étanche comportant une armature interne et deux films de recouvrement de ladite armature, caractérisée par le fait qu'elle comprend :
- des moyens d'ourdissage et des moyens de tramage permettant de former une armature non tissée comportant des fils de chaîne et des fils de trame disposés sur deux couches juxtaposées à la manière d'une grille ;
- des moyens de complexage appliquant les films de recouvrement contre l'armature non tissée, avec une force prédéterminée et à une température de complexage ;
caractérisée par le fait qu'elle comprend de plus :
- des moyens de préchauffage des films de recouvrement à une température de thermo-assemblage ;
et par le fait que les moyens de complexage appliquent les films contre l'armature avec une force prédéterminée choisie afin que les films de recouvrement pénètrent entre les fils de chaîne et les fils de trame, sans être complètement traversés par ces fils, et à une température de complexage inférieure à la température de thermo-assemblage et au plus égale à une température maximum supportée par les fils, afin qu'ils conservent leurs performances de ténacité.

Il est à noter que les fils de chaîne et les fils de trame formant la grille peuvent être indépendants ou thermo-assemblés.

Plusieurs modes de réalisation de l'invention vont à présent être décrits, à titre d'exemples non limitatif, en se référant aux dessins annexés, dans lesquels :
- les figures 1 et 2 illustrent de façon schématique la fabrication d'un complexe étanche conforme à l'invention, par application de deux films de recouvrement contre une armature interne non tissée ;
- la figure 3 est une vue de face représentant de façon schématique une machine de fabrication en continu d'un complexe étanche, selon un mode de réalisation de l'invention ;
- la figure 4 est une vue de face représentant à plus grande échelle les moyens d'ourdissage et de tramage de la machine de la figure 3 ;
- la figure 5 est une vue de dessus des moyens d'ourdissage et de tramage illustrés sur la figure 4 ;
- la figure 6 est une vue de face représentant de façon schématique une machine de fabrication en défilement, par deux opérations successives, d'un complexe étanche, selon un autre mode de réalisation de l'invention ;
- la figure 7 est une vue de face représentant à plus grande échelle et en position fermée un sous-ensemble de la machine de la figure 6, contenant notamment les moyens de complexage;
- la figure 8 est une vue comparable à la figure 6, illustrant un mode de réalisation préféré de l'invention ;
- la figure 9 est une vue en perspective représentant schématiquement l'armature d'un complexe non rectangulaire et non plan réalisé à l'aide de la machine illustrée sur la figure 8 ;
- la figure 10 est une vue de dessus de l'armature de la figure 9, sur laquelle les parties gauche et droite représentent deux étapes successives de fabrication de cette armature ;
- la figure 11 est une vue comparable à la figure 10, illustrant une troisième étape de fabrication de l'armature ; et,
- la figure 12 illustre l'assemblage par couture bord à bord de deux complexes réalisés conformément à l'invention.

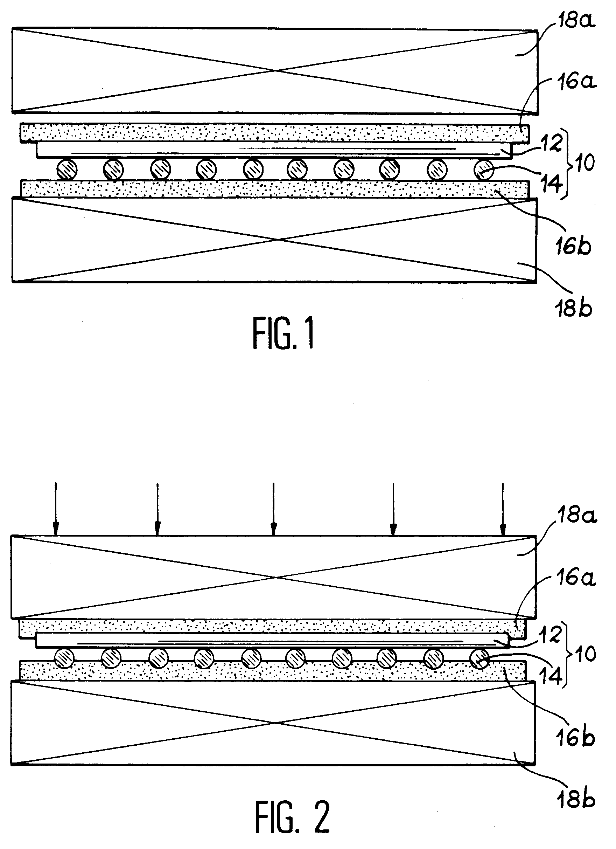

Sur la figure 1, la référence 10 désigne une armature interne en forme de grille servant, conformément à l'invention, à la fabrication d'un complexe étanche. Cette armature 10 est formée de fils de trame 12 et de fils de chaîne 14 disposés sous la forme de deux couches juxtaposées et qui se croisent par exemple à angle droit, sans aucun entrelacement. Les fils de trame 12 ainsi que les fils de chaîne 14 sont avantageusement constitués par des fils de polyéthylène haute ténacité tels que des fils HP-PE-Dyneema SK60 (marque déposée) aptes à supporter au plus une température d'environ 110°C. Ils peuvent cependant être réalisés en tout autre matériau, le matériau des fils de trame 12 pouvant en outre être identique ou différent du matériau des fils de chaîne 14. Les fils de trame 12 et les fils de chaîne 14 sont soit soudés ou collés les uns aux autres en leurs points d'intersection, soit reliés simplement entre eux par deux films de recouvrement 16a, 16b entre lesquels ces fils sont placés.

Les deux films de recouvrement 16a et 16b, de faible épaisseur, sont réalisés en un matériau fusible tel que du polyéthylène et forment avec l'armature 10 un complexe étanche. La température de fusion pâteuse du polyéthylène est comprise entre environ 120°C et environ 130°C.

Afin que les films de recouvrement 16a et 16b forment un tout avec l'armature interne 10, ils subissent un préchauffage à une température au moins égale à leur température de fusion pâteuse, avant d'être amenés au contact des fils de l'armature interne 10, entre les deux pièces 18a et 18b d'une presse chauffante représentée de façon très schématique sur la figure 1. Dans le cas où les films de recouvrement sont en polyéthylène, leur préchauffage est effectué par exemple à environ 140°C.

Les deux pièces 18a et 18b de la presse chauffante sont chauffées à une température de complexage inférieure à la température de fusion des films de recouvrement 16a et 16b et au plus égale à une température maximum supportée par les fils de trame 12 et par les fils de chaîne 14. Lorsque les fils de chaîne et les fils de trame sont constitués par des fils de polyéthylène haute ténacité, les pièces 18a et 18b sont, par exemple, chauffées à environ 110°C, ce qui permet d'éviter de chauffer ces fils à une température supérieure à la température limite à ne pas dépasser pour de telles fibres, afin qu'elles conservent leurs performances de ténacité.

Comme l'illustre très schématiquement la figure 2, la presse chauffante constituée par les pièces 18a et 18b permet d'appliquer sur l'ensemble formé par les deux films de recouvrement 16a et 16b et par l'armature non tissée 10 placée entre ces deux films une force prédéterminée. Cette force est choisie afin que les films de recouvrement 16a et 16b, maintenus en fusion par les deux pièces 18a et 18b, pénètrent entre les fils de trame 12 et entre les fils de chaîne 14 suffisamment pour donner à l'ensemble la cohésion souhaitée. Cependant, cette force est insuffisante pour que les films de recouvrement 16a et 16b soient complètement traversés par les fils de trame 12 et par les fils de chaîne 14 respectivement. De cette manière, la qualité de l'étanchéité du complexe ainsi obtenu est assurée et les performances de ténacité des fils de trame 12 et des fils de chaîne 14 sont préservées.

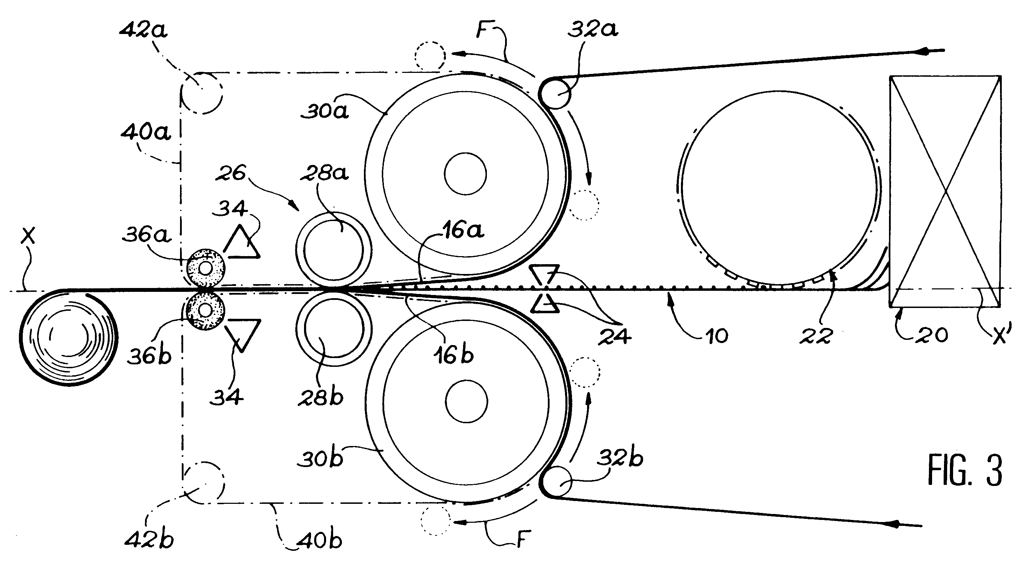

Un premier mode de réalisation d'une machine permettant de fabriquer, en continu, un tel complexe étanche va à présent être décrit en se référant aux figures 3 à 5.

L'agencement de la machine illustrée sur la figure 3 est tel que le complexe étanche est fabriqué dans un plan horizontal désigné par la référence X X′ sur la figure 3 et en allant de la droite vers la gauche sur cette figure.

Ainsi, la machine selon l'invention comprend successivement, en partant de la droite, des moyens d'ourdissage ou de chaînage 20 et des moyens de tramage 22 permettant de former une grille constituée de fils de chaîne 14 et de fils de trame 12 non tissés, disposés sous la forme de deux couches croisées superposées. Cette grille se déplace en continu vers la gauche dans le plan X X′ et passe devant des barres soufflantes 24 qui soudent les fils 12 et 14 en leurs points d'intersection, de façon à former l'armature non tissée.

Lorsque les fils de chaîne et de trame sont des fils de polyéthylène haute ténacité ne supportant pas une température supérieure à 110°C, les barres soufflantes 24 soufflent un air à une température d'environ 90°C qui permet le soudage de ces fils sans qu'ils ne perdent leurs performances. Les barres soufflantes 24 peuvent être supprimées, ou remplacées par des moyens de collage des fils 12 et 14, sans sortir du cadre de l'invention.

A la sortie des barres soufflantes 24, l'armature non tissée 10 continue à cheminer vers la gauche sur la figure 3 pour parvenir à des moyens de complexage 26.

Ces moyens de complexage 26 comprennent deux rouleaux chauffants 28a et 28b pressés l'un contre l'autre avec une force prédéterminée par des moyens appropriés (non représentés). Ces rouleaux chauffants sont agencés de telle sorte qu'ils soient tangents l'un à l'autre selon le plan X X′ et que leurs axes, parallèles à ce plan, soient perpendiculaires à la direction d'avance de l'armature 10 dans le plan X X′. Les rouleaux chauffants 28a et 28b permettent d'appliquer avec ladite force prédéterminée un film de recouvrement 16a, 16b sur chacune des faces de l'armature non tissée 10, c'est-à-dire qu'ils jouent le rôle des pièces 18a et 18b sur les figures 1 et 2.

Avant d'être pressé contre l'armature interne 10, chacun des films de recouvrement 16a et 16b circule respectivement sur un tambour chauffant 30a et 30b situé approximativement entre les barres soufflantes 24 et les rouleaux chauffants 28a et 28b. Les tambours chauffants 30a et 30b sont de même diamètre, sensiblement supérieur au diamètre des rouleaux chauffants 28a et 28b, et leurs axes sont disposés symétriquement par rapport au plan X X′ et orientés parallèlement aux axes des rouleaux chauffants. En outre, les tambours chauffants 30a et 30b sont légèrement espacés du plan X X′, de telle sorte que les films de recouvrement 16a et 16b n'arrivent pratiquement au contact de l'armature interne 10 qu'au droit des rouleaux chauffants 28a et 28b.

Chacun des films de recouvrement 16a et 16b est amené au contact du tambour chauffant 30a et 30b par un rouleau de renvoi 32a, 32b respectivement. Le film de recouvrement correspondant parvient jusqu'à ce rouleau de renvoi depuis un rouleau de stockage (non représenté) situé à l'extrémité droite de la machine en considérant la figure 3.

Comme l'illustre schématiquement la figure 3 (flèches F), les positions des rouleaux de renvoi 32a et 32b par rapport aux tambours chauffants 30a et 30b sont réglables, de telle sorte que la longueur du trajet parcouru par chacun des films de recouvrement 16a et 16b en contact avec le tambour chauffant correspondant peut varier. Ce réglage est tel que la distance entre chaque rouleau de renvoi et le tambour chauffant correspondant reste constante. En d'autres termes, le réglage de la position des rouleaux de renvoi 32a et 32b permet d'appliquer les films de recouvrement 16a et 16b contre des zones des tambours chauffants 30a et 30b qui forment en section des arcs de cercle de longueurs réglables, pouvant par exemple varier entre environ 30° et environ 180°.

Cette dernière caractéristique, combinée avec le chauffage de chacun des tambours 30a et 30b à une température contrôlée, par exemple d'environ 140°, au moins égale à la température de fusion du matériau tel que du polyéthylène constituant les films de recouvrement 16a et 16b, permet d'amener les films de recouvrement dans un état de fusion pâteuse lorsqu'ils quittent les tambours chauffants 30a et 30b pour se diriger vers les rouleaux chauffants 28a et 28b. En chauffant ces derniers rouleaux à une température voisine, par exemple, de 110°C, on contrôle ainsi avec une bonne précision la température à laquelle se trouvent les films de recouvrement lorsqu'ils sont appliqués contre l'armature interne au droit des moyens de complexage 26.

En variante, les films 16a et 16b sont réalisés en un matériau non thermo-soudable. Les moyens de complexage 26 peuvent alors comprendre, en amont des tambours chauffants 30a, 30b, des moyens pour appliquer sur les films de recouvrement 16a et 16b une colle thermiquement réactivable ou les deux composants d'une colle de type époxy. Le chauffage des films 16a, 16b réalisé par les tambours 30a, 30b permet alors d'atteindre la température de thermo-collage ou d'évaporation de la colle.

En aval des rouleaux chauffants 28a et 28b, c'est-à-dire à gauche de ces derniers en considérant la figure 3, le complexe étanche ainsi formé passe devant des buses de refroidissement 34 puis entre des rouleaux presseurs 36a et 36b qui assurent l'entraînement du complexe et des différents éléments qui le constituent vers la gauche en considérant la figure 3. Les rouleaux presseurs 36a et 36b sont en contact l'un contre l'autre, par l'intermédiaire du complexe étanche, selon le plan X X′ et leurs axes sont orientés parallèlement aux axes des rouleaux chauffants 28a, 28b et des tambours chauffants 30a, 30b. L'un au moins des rouleaux presseurs 36 est entraîné en rotation à vitesse constante, éventuellement réglable, par un ensemble motoréducteur (non représenté).

En aval des rouleaux presseurs 36, le complexe étanche ainsi fabriqué s'enroule sur un rouleau de stockage 38, interchangeable, disposé tangentiellement au plan X X′ et dont l'axe est également orienté parallèlement aux axes des rouleaux 28a, 28b.

Comme on l'a représenté en traits discontinus sur la figure 3, la machine qui vient d'être décrite brièvement est avantageusement complétée par deux bandes continues de convoyage 40a et 40b. La bande de convoyage 40a chemine sur le rouleau presseur supérieur 36a, sur le rouleau chauffant supérieur 28a, sur le tambour chauffant supérieur 30a et sur un rouleau fixe de renvoi 42a dont l'axe est situé approximativement dans le même plan vertical que les axes des rouleaux presseurs 36a et 36b. La bande continue de convoyage 40b chemine quant à elle sur le rouleau presseur inférieur 36b, sur le rouleau chauffant inférieur 28b, sur le tambour chauffant inférieur 30b et sur un rouleau de renvoi fixe 42b disposé symétriquement au rouleau fixe 42a par rapport au plan X X′. Ces bandes continues de convoyage 40a et 40b permettent de transporter dans les meilleures conditions les films de recouvrement 16a et 16b entre les tambours chauffants 30a et 30b et les rouleaux chauffants 28a et 28b, alors que ces films se trouvent à l'état de fusion pâteuse.

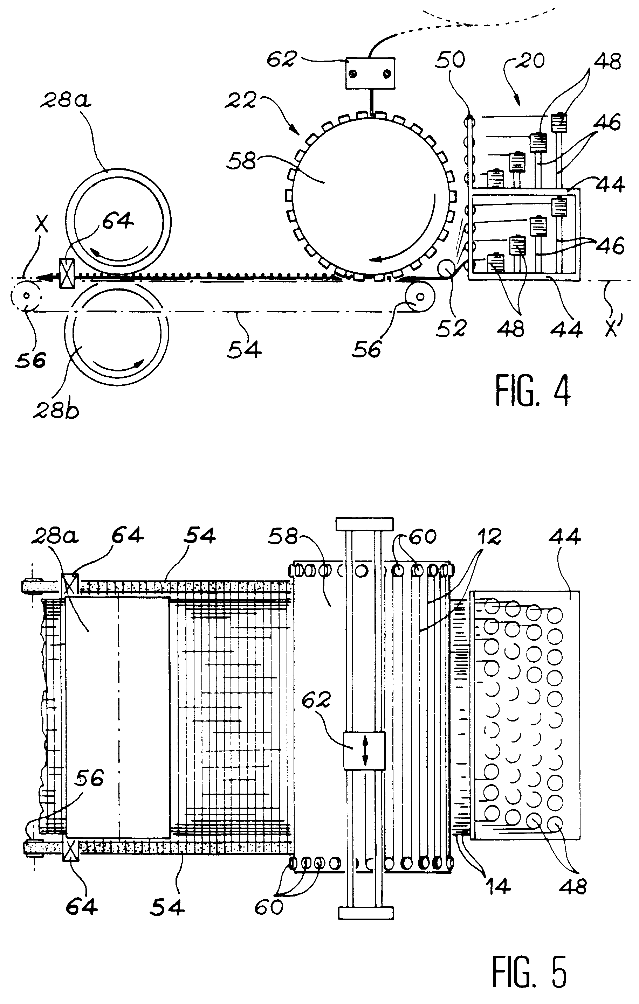

Les moyens d'ourdissage 20 et de tramage 22 vont à présent être décrits plus en détail en se référant aux figures 4 et 5.

Les moyens d'ourdissage 20 comprennent une ou plusieurs platines horizontales 44 (deux dans le mode de réalisation représenté), supportant chacune des axes verticaux 46 agencés par rangée et de façon légèrement décalée d'une rangée à l'autre, la longueur des axes 46 allant en diminuant de la droite vers la gauche. Chacun des axes 46 reçoit de façon rotative une bobine 48 de fil destinée à former les fils de chaîne 14 de l'armature centrale du complexe étanche.

Les bobines de fils 48 sont ainsi agencées selon un réseau régulier, de telle sorte que les fils issus des bobines cheminent parallèlement les uns aux autres et selon une direction horizontale jusqu'à un orifice ou un galet d'une grille verticale 50. A la gauche de la grille 50 et au niveau de la platine 44 la plus basse, chacun des fils 14 issus des bobines 48 et ayant traversé la grille 50 passe sur une poulie de renvoi 52. Toutes les poulies de renvoi 52 ont le même axe et cet axe est orienté perpendiculairement à la direction d'avance des fils dans le plan X X′, les poulies de renvoi 52 étant en outre tangentes à ce plan et placées au-dessus de celui-ci.

A la gauche des poulies de renvoi 52, le plan X X′ est matérialisé par la face supérieure d'une bande de transfert 54 qui chemine entre deux rouleaux 56 placés respectivement légèrement en aval des poulies de renvoi 52 et légèrement en aval des cylindres presseurs 28a et 28b.

Les moyens de tramage 22, placés légèrement en aval des poulies de renvoi 52, comprennent quant à eux un tambour de tramage rotatif 58 placé au-dessus de la bande de transfert 54, tangentiellement à cette dernière et de telle sorte que son axe soit orienté perpendiculairement à la direction d'avance des fils. Comme l'illustre plus précisément la figure 5, ce tambour de tramage rotatif 58 comporte à chacune de ses extrémités une série de plots 60 sur lesquels une navette de tramage 62, animée d'un mouvement de va-et-vient au-dessus de la génératrice supérieure du tambour de tramage 58, accroche le fil de trame 12 parallèlement aux génératrices du rouleau 58.

Lorsque les fils de trame 12 parviennent sur la bande de transfert 54 après avoir effectué un demi tour sur le tambour de tramage 58, ils sont découpés à proximité immédiate des plots 60 et accrochés sur la bande de transfert 54, par exemple au moyen d'un adhésif, par un dispositif approprié (non représenté).

Après que les films de recouvrement 16a, 16b, les fils de chaîne 14 et les fils de trame 12 aient été complexés par les rouleaux chauffants 28a, 28b, des dispositifs de délaizage 64 découpent les bords du complexe ainsi formé.

Si la nature de l'enveloppe ou du panneau étanche à fabriquer le justifie, les fils de chaîne 14 peuvent être positionnés selon des lignes en zig-zag à l'aide d'un dispositif approprié (non représenté) situé entre le tambour de tramage 58 et les barres soufflantes 24.

Ce mode de réalisation qui vient d'être décrit en se référant aux figures 3 à 5 concerne une machine dans laquelle l'ourdissage, le tramage, la soudure ou le collage éventuels des fils de chaîne et de trame, le dépôt des films de recouvrement sur l'armature ainsi formée et le complexage de l'ensemble sont réalisés en continu, en une seule opération.

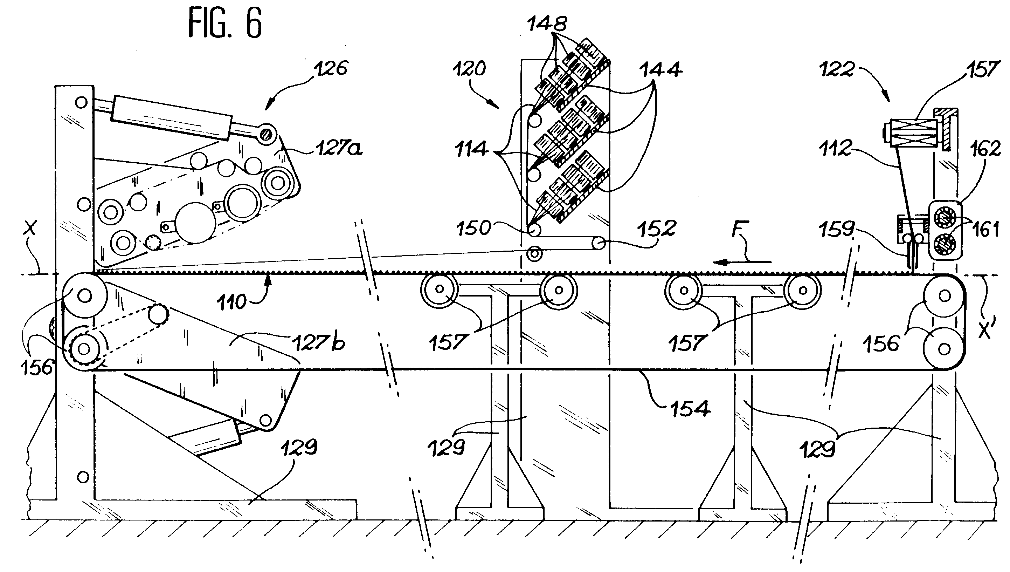

Dans un deuxième mode de réalisation représenté schématiquement sur la figure 6, la machine réalise, dans un premier temps, le tramage en continu et, dans un deuxième temps, l'ourdissage, le dépôt des films de recouvrement et le complexage. Cette deuxième série d'opérations est également réalisée en continu.

Les éléments de la machine illustrée sur la figure 6 correspondant à des éléments de la machine décrite précédemment en se référant aux figures 3 à 5 sont désignés par les mêmes chiffres de références, augmentés de 100.

La machine de la figure 6 comprend un bâti 129, en plusieurs parties, qui supporte deux jeux de quatre rouleaux d'entraînement 156, les rouleaux des deux jeux étant coaxiaux et disposés de part et d'autre d'une zone centrale de fabrication du complexe, aux deux extrémités de la machine. Chacun de ces jeux de rouleaux 156 supporte une bande de transfert sans fin 154 dont le brin supérieur définit le plan horizontal du travail XX′. Un motoréducteur (non représenté) entraîne en rotation l'un des rouleaux 156 de chaque jeu. Entre les rouleaux 156, le brin supérieur de chaque bande de transfert 154 est guidé par des rouleaux intermédiaires 157 montés sur des parties modulaires du bâti 129.

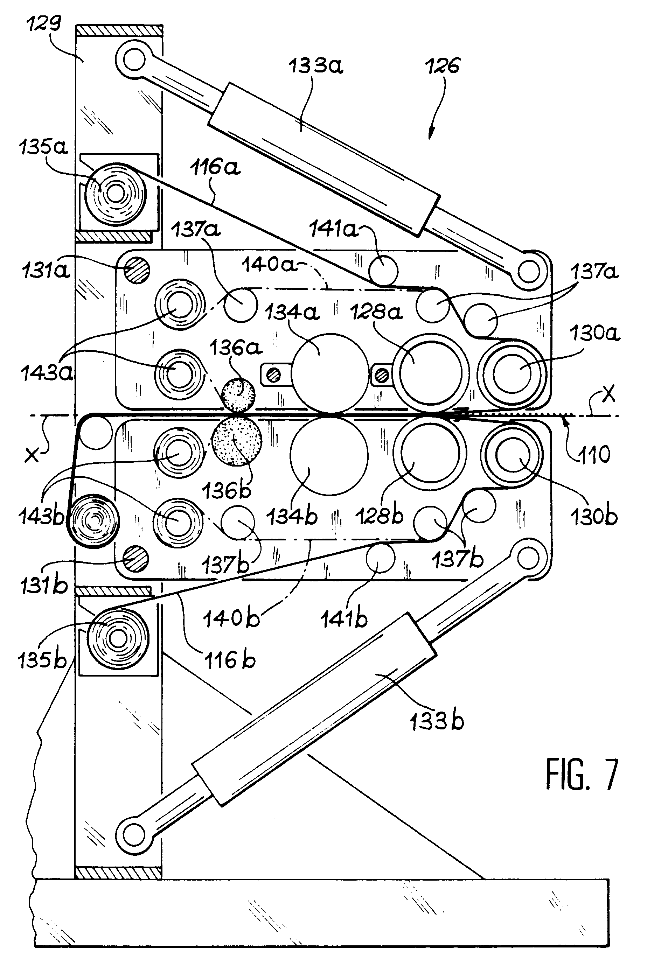

En allant d'une extrémité à l'autre de la machine, par exemple de la droite vers la gauche sur la figure 7, différentes parties modulaires du bâti 129 supportent un sous-ensemble de tramage 122, un sous-ensemble d'ourdissage ou de chaînage 120 et un sous-ensemble de complexage 126.

Le sous-ensemble de tramage 122 comprend une bobine unique 157, d'axe horizontal, supportée par la partie correspondante du bâti 129, et une passette verticale 159 montée sur un chariot 162 apte à être animé d'un mouvement transversal de va-et-vient sur deux colonnes 161 solidaires du bâti et dont les axes sont parallèles aux axes des rouleaux 156.

Lors de la mise en oeuvre du sous-ensemble de tramage 122, le mouvement transversal de va-et-vient du chariot 162 s'accompagne d'une avance des bandes de transfert 154, par exemple dans le sens de la flèche F1 sur la figure 6. Sur chacun des bords latéraux du complexe en cours de fabrication, le fil de trame unique 112 délivré par la bobine 157 s'accroche par exemple sur des tiges régulièrement espacées (non représentées) qui font saillie vers le haut sur les bandes de transfert 154, dans le cas où le complexe présente une forme rectangulaire. Les mouvements combinés du chariot 162 et des bandes de transfert 154 permettent ainsi de réaliser la trame du complexe sur une longueur correspondant à la longueur que l'on désire donner à ce dernier (la machine présente avantageusement un caractère modulaire permettant de faire varier cette longueur en utilisant autant de parties du bâti 129 portant des rouleaux intermédiaires 157, que nécessaire).

Les bouclettes de reprise de contrainte formées par le fil de trame sur les bords latéraux de la grille en cours de fabrication permettent de renforcer ces bords latéraux au moyen de câbles latéraux de reprise de contrainte. Ces câbles sont enfilés dans les boucles du fil de trame soit manuellement, soit par un mécanisme approprié (non représenté). Ils sont réalisés, par exemple, sous la forme d'un fil de même nature que les fils de chaîne et de trame, mais de plus forte section, ou sous la forme de fils tressées identiques aux fils de chaîne et de trame.

Il est à noter que la machine de la figure 6 permet également de fabriquer des complexes de forme non rectangulaire. Dans ce cas, les tiges servant à l'accrochage du fil de trame 112 ne sont plus situées directement sur les bandes de transfert 154, mais sur des éléments fixés sur ces bandes et maintenus dans le plan XX′, jusqu'à l'accrochage du fil de trame, par un tapis transporteur (non représenté) placé entre les bandes 154.

Les moyens d'ourdissage 120 comprennent quant à eux plusieurs platines 144 solidaires de la partie correspondante du bâti 129 et portant autant de bobines 148 que le complexe à réaliser comporte de fils de chaîne 114. En se dévidant de la bobine 148 correspondante, chacun des fils de chaîne 114 passe sur deux poulies de renvoi 150, 152, son extrémité étant accrochée sur une barre transversale (non représentée) fixée par ses extrémités sur les bandes de transfert 154.

Le sous-ensemble de complexage 126 va à présent être décrit en détail en se référant à la figure 7.

Il comprend deux blocs 127a et 127b, articulés sur la partie correspondante du bâti 129, de part et d'autre du plan XX′, par deux axes 131a et 131b parallèles à ce plan et orientés selon une direction orthogonale à la direction d'avance de l'armature non tissée 110. Des vérins 133a et 133b, interposés entre le bâti 129 et chacun des blocs 127a et 127b, permettent de faire pivoter ces derniers autour des axes 131a, 131b entre une position ouverte (figure 6), dans laquelle les faces en vis-à-vis des blocs 127a et 127b sont écartées l'une de l'autre, et une position fermée (figure 7), dans laquelle ces faces sont tangentes au plan XX′.

De part et d'autre du plan XX′, le bâti 129 porte un rouleau de stockage 135a, 135b, d'axe parallèle aux axes 131a et 131b, et à partir duquel peut se dérouler un film de recouvrement 116a, 116b, respectivement.

A l'intérieur de chacun des blocs 127a, 127b, le film de recouvrement correspondant 116a, 116b, est plaqué contre une bande de convoyage 140a, 140b par un rouleau de renvoi 141a, 141b. Chaque bande de convoyage 140a, 140b a ses extrémités enroulées sur deux bobines 143a, 143b montées dans le bloc 127a, 127b correspondant. A partir de la bobine 143a, 143b la plus éloignée du plan XX′, chacune des bandes de convoyage 140a, 140b chemine successivement sur des rouleaux de renvoi 137a, 137b, sur un tambour chauffant 130a, 130b, sur un rouleau chauffant 128a, 128b, sur un rouleau de refroidissement 134a, 134b et sur un rouleau d'entraînement 136a, 136b.

Les rouleaux de renvoi 141a, 141b appliquent les films de recouvrement 116a, 116b contre les bandes de convoyage 140a, 140b entre les rouleaux de renvoi 137a, 137b. Lorsque les blocs 127a, 127b sont dans leur position fermée, les films de recouvrement 116a, 116b sont plaqués sur l'armature 10 située dans le plan XX′, entre les rouleaux chauffants 128a, 128b et les rouleaux d'entraînement 136a, 136b.

De plus, les rouleaux chauffants 128a, 128b, les rouleaux de refroidissement 134a, 134b et les rouleaux d'entraînement 136a, 136b sont tangents selon le plan XX′.

Les axes du rouleau chauffant 128b et du rouleau de refroidissement 134b montés dans le bloc inférieur 127b sont fixes, alors que les axes du rouleau chauffant 128a et du rouleau de refroidissement 134a montés dans le bloc supérieur 127a sont mobiles et sollicités élastiquement vers le bas, avec une force prédéterminée par des systèmes élastiques (non représentés) tels que des ressorts ou des vérins. En outre, les axes de tous les rouleaux et cylindres portés par les blocs 127a, 127b sont parallèles aux axes d'articulation 131a et 131b de ces derniers.

Avant d'être pressés contre l'armature interne 110, les films de recouvrement 116a et 116b sont chauffés sur les tambours chauffants 130a et 130b, qui sont légèrement espacés du plan XX′, de telle sorte que les films de recouvrement 116a et 116b n'arrivent pratiquement au contact de l'armature interne 110 qu'au droit des rouleaux chauffants 128a et 128b.

Comme dans le premier mode de réalisation, les tambours chauffants 130a, 130b peuvent aussi être utilisés pour assurer le thermo-collage ou l'évaporation d'une colle préalablement déposée sur les films 116a, 116b.

Pendant la phase de tramage, le sous-ensemble de complexage 126 est ouvert et le sous-ensemble d'ourdissage est à l'arrêt.

Lorsque le tramage est terminé, les extrémités des fils de chaîne 114 sont accrochées sur la barre transversale précitée et le sous-ensemble de complexage 126 est fermé. Les opérations de chaînage et de complexage sont alors réalisées en commandant à nouveau l'avance des bandes de transfert 154 dans le sens de la flèche F1 et la mise en oeuvre des différents moyens de chauffage et de refroidissement contenus dans les moyens de complexage 126.

Comme l'illustre la figure 6, dans ce deuxième mode de réalisation de l'invention, les fils de chaîne 114 sont amenés au contact des fils de trame 112, en même temps que les films de recouvrement 116a et 116b, par les rouleaux chauffants du sous-ensemble de complexage 126. Par conséquent, la formation de la grille et le complexage de l'ensemble sont simultanés.

Dans le cas où le complexe à réaliser est rectangulaire, les fils de chaîne sont tous parallèles à la direction d'avance des bandes de transfert 154, de sorte que le complexe est obtenu directement en réalisant les opérations décrites précédemment.

Dans le cas où le complexe n'est pas rectangulaire, le parallélisme des fils de chaîne n'existe plus. Par conséquent, il est alors nécessaire de positionner latéralement chacun des fils de chaîne 114 juste avant de réaliser le complexage. Pour cela, on peut ajouter à la machine illustrée sur la figure 6 un peigne (non représenté) comportant des dents dont l'écartement varie au fur et à mesure de l'avance des bandes de transfert 154, selon un programme déterminé en fonction de la forme de complexe à réaliser. Ce peigne est placé entre les moyens d'ourdissage 120 et les moyens de complexage 126.

Il est à noter qu'un peigne peut aussi être utilisé, dans le cas d'un complexe rectangulaire ou non, si l'on désire répartir les fils de chaîne selon une loi déterminée, afin d'optimiser la tenue des contraintes sur l'enveloppe ou le panneau fini, lorsque la répartition des contraintes n'est pas homogène.

Dans le mode de réalisation qui vient d'être décrit en se référant aux figures 6 et 7, la trame du complexe est réalisée à partir d'un fil unique, non coupé, qui fait des bouclettes sur chacun des bords latéraux du complexe. Un câble de liaison introduit manuellement ou mécaniquement dans ces bouclettes permet de raccorder plusieurs complexes bord à bord, par couture, en assurant la reprise des contraintes supportées par les fils de chaîne, de façon à réaliser une enveloppe complète. A cet effet, les feuilles de recouvrement ne recouvrent pas les câbles de liaison.

En revanche, la chaîne du complexe est formée de'fils de chaîne distincts, de sorte que la reprise des contraintes aux extrémités du complexe est difficile à réaliser.

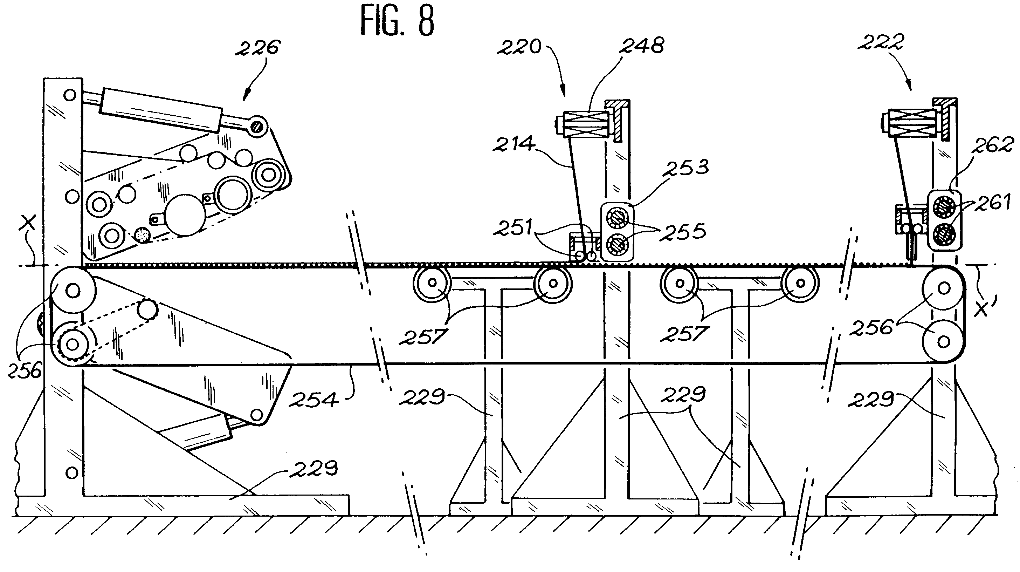

La machine qui va à présent être décrite en se référant à la figure 8 remédie à cet inconvénient, en dissociant les opérations de tramage, les opérations d'ourdissage ou de chaînage et les opérations de complexage. Grâce à cette dissociation, il devient possible de réaliser le chaînage à l'aide d'un fil unique, de même que le tramage. La reprise des contraintes peut alors être effectuée sans difficulté aussi bien sur les fils de chaîne que sur les fils de trame du complexe.

De façon concrète, la machine illustrée sur la figure 8 ne diffère de la machine illustrée sur la figure 6 que par les moyens d'ourdissage. Pour faciliter la compréhension, les éléments comparables à ceux de la machine de la figure 6 sont désignés par les mêmes chiffres de référence, augmentés de 100.

Comme dans la machine précédente, un bâti 229, réalisé en plusieurs parties modulaires, supporte deux bandes latérales de transfert sans fin 254, par l'intermédiaire de rouleaux d'entraînement 256 et de rouleaux intermédiaires 257. Le long du plan supérieur XX′ défini par les bandes 254, le bâti 229 porte, de la droite vers la gauche, un sous-ensemble de tramage 222, un sous-ensemble d'ourdissage ou de chaînage 220 et un sous-ensemble de complexage 226.

Le sous-ensemble de tramage 222 et le sous-ensemble de complexage 226 sont identiques à ceux de la machine de la figure 6. Pour plus de détails concernant ces sous-ensembles, on se référera donc à la description qui en a été faite précédemment.

En ce qui concerne le sous-ensemble d'ourdissage ou de chaînage 220, il comprend une bobine unique 248, dont l'axe horizontal est supporté par la partie correspondante du bâti 229. En quittant cette bobine 228, le fil de chaîne unique 214 chemine entre deux poulies 251 portées par un chariot 253 monté coulissant sur deux colonnes transversales 255 solidaires du bâti 220.

Lors de la réalisation du chaînage, qui intervient de préférence après le tramage, les bandes de transfert 254 sont animées d'un mouvement de va-et-vient sur une distance qui correspond à la longueur du complexe à réaliser. Simultanément, le chariot 253 se déplace progressivement d'un bord à l'autre du complexe. Ces deux mouvements combinés conduisent à réaliser en continu le chaînage de toute la surface du complexe.

Afin que le fil de chaîne 214 reste accroché aux extrémités du complexe à chaque fois que le sens de déplacement des bandes de transfert 254 s'inverse, ces dernières supportent, en des emplacements correspondant aux extrémités du complexe, des barres d'accrochage transversales (non représentées). Chacune de ces barres d'accrochage porte des tiges (non représentées) régulièrement espacées par des fils de chaîne, et qui font saillie vers le haut à partir de la barre correspondante. A chaque fois que le sens de déplacement des bandes 254 s'inverse, le fil de chaîne 214 contourne l'une de ces tiges et s'y trouve accroché, sans que la continuité du fil de chaîne soit interrompue.

Lorsque l'ourdissage est terminé, des câbles d'extrémité de reprise de contrainte sont enfilés dans les bouclettes formées par le fil de chaîne aux extrémités de la grille. La nature de ces câbles, ainsi que leur technique de mise en place, sont identiques à celles des câbles latéraux de reprise de contrainte qui sont introduits dans les bouclettes formées par le fil de trame.

Lorsque le tramage et le chaînage ont été réalisés, les moyens de complexage 226, précédemment ouverts, sont fermés, et le complexage est à son tour effectué.

La machine qui vient d'être décrite en se référant à la figure 8 permet de fabriquer un complexe dont les fils de chaîne et de trame sont réalisés à partir de fils uniques non coupés, formant des bouclettes sur les bords latéraux et aux extrémités du complexe. Il est donc possible, à partir de plusieurs complexes assemblés par couture, de réaliser une enveloppe ou un panneau dans lequel les contraintes supportées par les fils de chaîne et par les fils de trame peuvent être reprises en totalité. Les caractéristiques de résistance mécanique de cette enveloppe ou de ce panneau sont ainsi optimisées.

Par ailleurs, la machine de la figure 8 permet de fabriquer des complexes de forme quelconque, c'est-à-dire aussi bien rectangulaires qu'en fuseau, triangulaire, etc..

La fabrication d'un complexe rectangulaire n'appelle pas de commentaire particulier. En effet, elle est obtenue simplement en mettant en oeuvre la machine de la manière décrite.

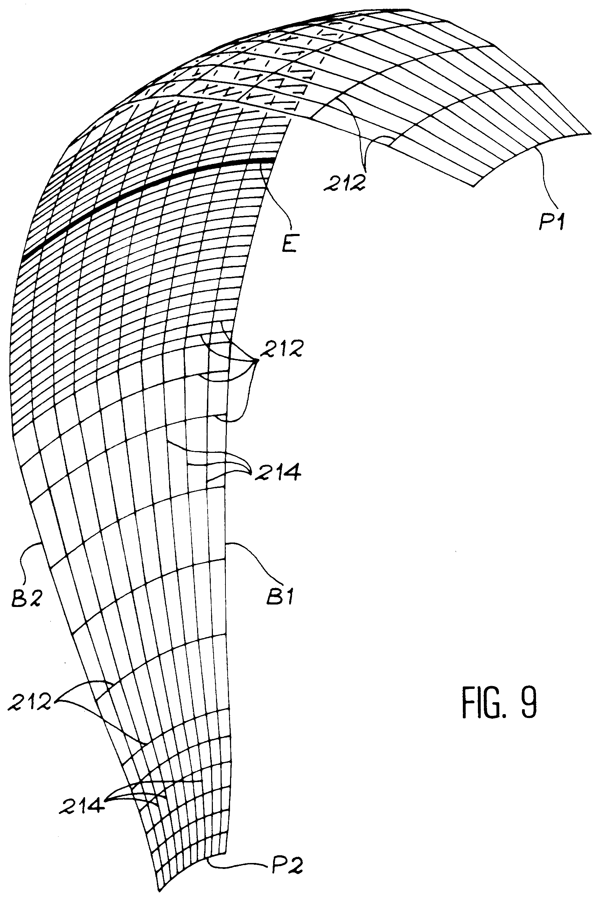

La fabrication d'un complexe de forme non rectangulaire et non plane va à présent être décrite en se référant aux figures 9 à 11.

La figure 9 représente, en perspective, l'armature d'un complexe dont certains brins d'un fil de trame unique sont désignés par la référence 212 et dont certains brins d'un fil de chaîne unique sont désignés par la référence 214. Pour faciliter la lecture de la figure, seules certains des brins de ces deux fils ont été représentés.

Par ailleurs, les bords latéraux ont été désignés par les références B1 et B2 et les bords d'extrémité, ou pôles, ont été désignés par les références P1 et P2. En outre, le segment transversal de plus grande largeur, ou équateur, a été désigné par la référence E.

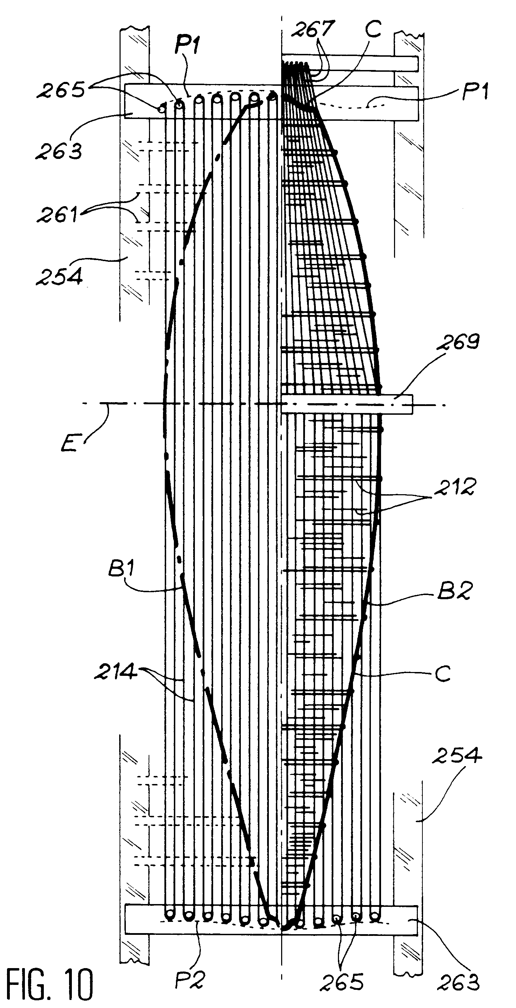

Préalablement à la fabrication d'un tel complexe, on calcule, par ordinateur, la longueur de chacun des brins 212 et 214 des fils de trame et de chaîne dans le complexe à réaliser. Toujours par le calcul, on ramène dans un plan les longueurs ainsi mesurées, en disposant tous les brins 212 du fil de trame parallèlement à une direction transversale et tous les brins 214 du fil de chaîne parallèlement à une direction longitudinale. Les brins 212 du fil de trame sont alors limités par les bords latéraux B1, B2 ramenés dans le plan et les brins 214 du fil de chaîne sont limités à leurs extrémités par les pôles P1, P2 ramenés dans le plan et étendus sur la largeur de l'équateur E, comme l'illustre la figure 10.

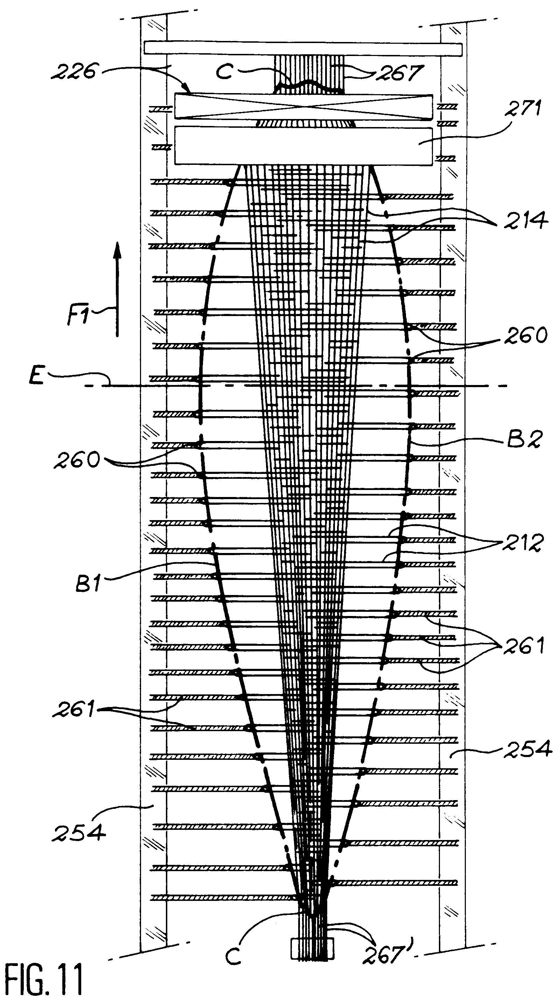

Sur la base de ces données théoriques, on équipe la machine de la figure 8 de tiges d'accrochage 260 (figure 11), disposées dans le plan XX′ selon les courbes formées par les bords latéraux B1, B2 ramenés dans ce plan. Ces tiges 260 font saillie vers le haut à l'extrémité de lanières souples 261 dont les extrémités opposées sont fixées sur les bandes de transfert 254. Le nombre des tiges 260 et des lanières 261 a été volontairement réduit sur la figure 11, pour faciliter la lecture de la figure. Jusqu'à l'accrochage du fil de trame 212 sur ces tiges 260, les lanières 261 sont supportées dans le plan XX′ par un tapis transporteur (non représenté) ou tout moyen équivalent.

On équipe également la machine de la figure 8, en des emplacements correspondant aux extrémités du complexe à réaliser, de deux barres transversales 263 dont les extrémités sont fixées sur les bandes de transfert 254. Des tiges 265 font saillie sur la face supérieure de chacune de ces barres 263, selon les courbes formées par les pôles P1, P2, ramenés dans le plan et étendus sur la largeur de l'équateur E.

Le tramage est réalisé, de la manière décrite précédemment, en accrochant le fil de trame 212 sur chacune des tiges 260. Un programme approprié permet, le cas échéant, de limiter les mouvements de va-et-vient du chariot 262 sur les colonnes 261 (figure 8).

Le fil de chaîne 214 est ensuite mis en place sur les tiges 265, comme illustré sur la partie gauche de la figure 10, en actionnant le sous-ensemble de chaînage 220.

On met en place, dans les bouclettes ainsi formées sur les bords B1, B2 et le long des pôles P1, P2, des câbles de liaison tels que les câbles C illustrés sur la partie droite de la figure 10.

On accroche ensuite sur le câble C placé le long du pôle P1 des fils de positionnement et de tension 267, après avoir bloqué le fil de chaîne 214 au niveau de l'équateur E, par exemple en le pinçant entre deux barres transversales 269 (à droite sur la figure 10).

On met ensuite en tension les fils 267, tout en les rapprochant, afin de donner au pôle P1 sa largeur définitive. Lorsque cette opération est terminée, comme illustré sur la partie droite de la figure 10, on bloque ces fils 267 tendus, et on libère l'équateur E.

Chacun des brins du fil de chaîne 214 est ensuite maintenu en tension par des fils de positionnement et de tension 267′ (figure 11), accrochés au câble de liaison C placé le long du pôle P2.

Comme l'illustre la figure 11, le complexage peut alors être réalisé, à l'aide du sous-ensemble de complexage 226. Immédiatement en amont de ce sous-ensemble, en considérant le sens de déplacement F1 de l'armature, est placé un peigne 271. Ce peigne est équipé de dents (non représentées) qui modulent selon un programme préétabli l'écartement entre les brins du fil de chaîne 214, afin que ces brins soient répartis sur toute la largeur du complexe, d'une extrémité à l'autre de ce dernier, selon une loi prédéterminée.

Le programme de déplacement des dents du peigne 271 tient compte du décalage qui existe entre celui-ci et le sous-ensemble de complexage 226. De plus, en amont de ce sous-ensemble, les brins du fil de chaîne 214 se trouvent dans un plan décalé vers le haut par rapport au plan contenant les brins du fil de trame 212, ce qui permet d'éviter toute interaction entre le peigne et ces derniers.

Par ailleurs, le sous-ensemble de complexage est avantageusement équipé de moyens de découpe latérale des films de recouvrement, selon un programme préétabli, qui permettent de n'appliquer sur l'armature que les largeurs de films correspondant à la largeur du complexe à l'emplacement considéré. Cette largeur est prévue pour ne pas recouvrir les bouclettes latérales dans lesquelles ont été placées les câbles de liaison C.

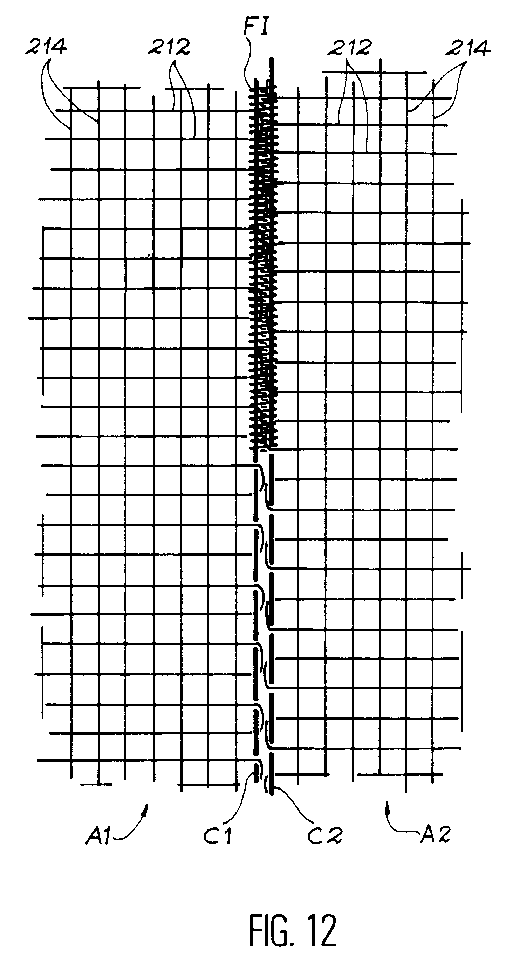

Ainsi, et comme l'illustre la figure 12, il est possible de lier bord à bord deux complexes A1 et A2, réalisés de la manière qui vient d'être décrite, au moyen d'un fil de couture FI. La nature de ce fil de couture est, de préférence, la même que celle des fils de trame et de chaîne constituant l'armature des complexes. Ce fil de couture entoure les bouclettes latérales formées par les fils de trame des deux complexes, ainsi que les câbles de liaison C1, C2 placés dans ces bouclettes. Les contraintes supportées par l'un des complexes sont ainsi transmises intégralement à l'autre.

L'étanchéité des assemblages est obtenu en plaçant sur chacune des coutures un ruban étanche, qui est soudé ou collé aux films 116a, 116b. Les contraintes de structure reprises par les fils ne transitent pas par ce ruban, mais par les câbles C1 et C2.

La présence de bouclettes sur les bords latéraux et sur les bords d'extrémité des complexes permet de fabriquer des enveloppes et des panneaux étanches de formes quelconques aptes à supporter des contraintes mécaniques élevées, réparties de façon homogène ou non. En effet, les bouclettes ainsi que les câbles de liaison placés dans celles-ci assurent la reprise totale des contraintes supportées par l'armature de chacun des complexes.

Bien entendu, l'invention n'est pas limitée au mode de réalisation qui vient d'être décrit à titre d'exemple, mais en couvre toutes les variantes. Ainsi, comme on l'a déjà observé, les matériaux constituant les fils de chaîne et les fils de trame de l'armature peuvent être identiques ou différents. De même, la nature et l'épaisseur des matériaux constituant les films de recouvrement assurant l'étanchéité du complexe obtenu peuvent varier sans sortir du cadre de l'invention. L'invention couvre également les réalisations de complexes dans lesquels des produits d'interface, tels que de la colle, sont utilisés entre les fibres entrecroisées et/ou entre les films et ces fibres.

Par ailleurs, la machine selon l'invention permet de réaliser à volonté des complexes pourvus, ou non, de bouclettes de reprise de contraintes sur leurs bras latéraux et/ou d'extrémité, et dans lesquels la répartition des fils de chaîne et/ou des fils de trame répond à une loi prédéterminée, permettant d'optimiser la tenue des contraintes de la structure.

Enfin, les différents moyens utilisés dans les machines décrites en se référant aux figures 3 à 5, 6 et 7 et 8 peuvent être remplacés par des moyens techniquement équivalents sans sortir du cadre de l'invention.

## Revendications

1. Procédé de fabrication d'un complexe étanche comportant une armature interne et deux films de recouvrement de ladite armature, comprenant les étapes suivantes :
- réalisation d'une armature (10) non tissée formée de fils de chaîne (14) et de fils de trame (12) disposés sur deux couches juxtaposées, à la manière d'une grille ;
- application des films de recouvrement (16a, 16b) contre l'armature non tissée, avec une force prédéterminée et à une température de complexage ;
caractérisé par le fait que l'étape d'application des films de recouvrement contre l'armature est précédée d'une étape de préchauffage des films de recouvrement à une température de thermo-assemblage, ladite force prédéterminée étant choisie afin que les films de recouvrement pénètrent entre les fils de chaîne et les fils de trame, sans être complètement traversés par ces fils, et la température de complexage étant inférieure à la température de thermo-assemblage et au plus égale à une température maximum supportée par les fils, afin qu'ils conservent leurs performances de ténacité.

2. Procédé selon la revendication 1, caractérisé par le fait qu'on réalise l'armature (210) non tissée en effectuant successivement une opération de tramage au moyen d'un fil de trame (212) continu et une opération de chaînage au moyen d'un fil de chaîne (214) continu, de façon à former des bouclettes de reprise de contraintes sur deux bords latéraux (B1, B2) de la grille, à l'aide du fil de trame, et sur deux bords d'extrémité de la grille, à l'aide du fil de chaîne.

3. Procédé selon la revendication 2, caractérisé par le fait qu'on passe dans les bouclettes de reprise de contraintes situées sur chacun des bords latéraux et sur chacun des bords d'extrémité un câble de liaison (C) du complexe à une structure voisine, et part le fait que les films de recouvrement ne sont pas appliqués sur ces câbles de liaison.

4. Procédé selon l'une quelconque des revendications 2 et 3, appliqué à la réalisation d'un complexe non rectangulaire, caractérisé par le fait qu'on effectue l'opération de tramage en accrochant le fil de trame (212) continu sur des organes d'accrochage latéraux (260) répartis le long des bords latéraux (B1, B2) de la grille ; puis on effectue l'opération de chaînage en accrochant le fil de chaîne (214) continu sur des organes d'accrochage d'extrémité (265) répartis transversalement sur une largeur égale à la largeur d'un segment transversal (E) de plus grande largeur du complexe à réaliser, la distance entre ce segment transversal et chacun des organes d'accrochage d'extrémité étant modulée afin d'être égale à la longeur finale du brin correspondant du fil de chaîne, dans le complexe à réaliser ; puis on bloque les brins du fil de chaîne (214) sur ledit segment transversal (E) de plus grande largeur et on donne à une première extrémité (P1) de la grille sa largeur définitive, en maintenant les brins en tension entre cette première extrémité et ledit segment transversal ; puis on relâche les brins du fil de chaîne (214) sur le segment transversal (E) ; enfin, on applique les films de recouvrement tout en modulant l'écartement des brins des fils de chaîne, à partir de la première extrémité, et en maintenant ces brins en tension.

5. Procédé selon la revendication 1, caractérisé par le fait qu'on réalise l'armature non tissée (110) en effectuant une opération de tramage au moyen d'un fil de trame continu (112), puis une opération de chaînage au moyen de fils de chaîne (214) distincts, l'opération de chaînage et l'application des films de recouvrement étant réalisées simultanément en continu, et l'opération de tramage formant des bouclettes de reprise de contraintes sur deux bords latéraux de la grille, à l'aide du fil de trame (212).

6. Procédé selon la revendication 5, caractérisé par le fait qu'on passe dans les bouclettes de reprise de contraintes un câble de liaison et par le fait que les films de recouvrement ne sont pas appliqués sur ces câbles de liaison.

7. Procédé selon la revendication 1, caractérisé par le fait qu'on effectue simultanément en continu la réalisation de l'armature non tissée (10), le préchauffage et l'application des films de recouvrement (16a, 16b), l'armature non tissée étant obtenue en effectuant en continu une opération de chaînage, une opération de tramage et une opération de soudage des fils de chaîne (14) et des fils de trame (12).

8. Procédé selon l'une quelconque des revendications précédentes, caractérisé par le fait qu'on refroidit le complexe après l'application des films de recouvrement.

9. Machine de fabrication d'un complexe étanche comportant une armature interne et deux films de recouvrement de ladite armature comprenant :
- des moyens (20) d'ourdissage et des moyens (22) de tramage permettant de former une armature non tissée comportant des fils de chaîne et des fils de trame disposés sur deux couches juxtaposées à la manière d'une grille ;
- des moyens (26) de complexage appliquant des films de recouvrement contre l'armature non tissée, avec une force prédéterminée et à une température de complexage ;
caractérisée par le fait qu'elle comprend de plus :
- des moyens (30a,30b) de préchauffage des films de recouvrement (16a, 16b) à une température de thermo-assemblage ;
et par le fait que les moyens de complexage appliquent les films contre l'armature avec une force prédéterminée choisie afin que les films de recouvrement pénètrent entre les fils de chaîne et les fils de trame, sans être complètement traversés par ces fils, et à une température de complexage inférieure à la température de thermo-assemblage et au plus égale à une température maximum supportée par les fils, afin qu'ils conservent leurs performances de ténacité.

10. Machine selon la revendication 9, caractérisée par le fait qu'elle comprend, en aval des moyens (26) de complexage, des moyens (36) d'entraînement en continu du complexe étanche.

11. Machine selon la revendication 10, caractérisée par le fait qu'elle comprend également, entre les moyens (26) de complexage et le rouleau de stockage (38), des moyens (34) de refroidissement du complexe étanche.

12. Machine selon l'une quelconque des revendications 9 à 11, caractérisée par le fait que les moyens de préchauffage comprennent deux tambours chauffants (30a, 30b) et deux rouleaux de renvoi réglables (32a, 32b) permettant d'appliquer les films de recouvrement contre des zones des tambours chauffants formant en section des arcs de cercle de longueurs réglables.

13. Machine selon l'une quelconque des revendications 9 à 12, caractérisée par le fait que les moyens de complexage comprennent deux rouleaux chauffants (30a, 30b) et des moyens pour appliquer ces rouleaux chauffants l'un contre l'autre avec ladite pression prédéterminée.

14. Machine selon la revendication 13, combinée avec la revendication 12, caractérisée par le fait que des bandes de convoyage (40a, 40b) cheminent entre chacun des tambours chauffants (30a, 30b) et le rouleau chauffant (28a, 28b) correspondant, afin de supporter les films de recouvrement.

## Claims

1. Process for the production of a tight complex incorporating an internal reinforcement, as well as tow covering films for the said reinforcement, comprising the stages of producing a nonwoven reinforcement (10) formed from warp threads (14) and weft threads (12) arranged on two juxtaposed layers in the manner of a grid, application of covering films (16a, 16b) to the non-woven reinforcement with a predetermined force and at a complexing temperature, characterized in that the stage of applying the covering films to the reinforcement is preceded by a stage of preheating the covering films to a thermoassembly temperature, said predetermined force being chosen in such a way that the covering films penetrate between the warp threads and the weft threads without being completely traversed by said threads, and the complexing temperature is lower than the thermoassembly temperature and at the most equal to the maximum temperature withstood by the threads, in order that they retain their strength characteristics.

2. Process according to claim 1, characterized in that the nonwoven reinforcement (210) is produced by successively carrying out a wefting operation by means of a continuous weft thread (212) and a warping operation by means of a continuous warp thread (214), so as to form stress absorption loops on two lateral edges (B1, B2) of the grid with the aid of the weft thread and on two terminal edges of the grid with the aid of the warp thread.

3. Process according to claim 2, characterized in that a cable (C) for connecting the complex to an adjacent structure is passed into the stress absorption loops located on each of the lateral edges and on each of the terminal edges and consequently the covering films are not applied to the connecting cables.

4. Process according to either of the claims 2 and 3 applied to the production of a non-rectangular complex, characterized in that the wefting operation is carried out by attaching the continuous weft thread (212) to lateral attachment members (260) distributed along the lateral edges (B1, B2) of the grid, which is followed by the warping operation by attaching the continuous warp thread (214) to terminal attachment members (265) distributed transversely over a width equal to the width of a wider transverse segment (E) of the complex to be produced, the distance between this transverse segment and each of the terminal attachment members being modified so as to be equal to the final length of the corresponding strand of the warp threads in the complex to be produced, the warp thread (214) strands are then locked on said wider transverse segment and to a first end (P1) of the grid is given its final width, by maintaining the strands under tension between said first end and said transverse segment, after which the strands of the warp thread (214) on the transverse segment are slackened and finally the covering films are applied, whilst modifying the spacing of the warp thread strands, as from the first end and maintaining said strands under tension.

5. Process according to claim 1, characterized in that the nonwoven reinforcement (110) is produced by carrying out a wefting operation by means of a continuous weft thread (112), followed by a carping operation by means of separate warp threads (214), the warping operation and the application of the covering films being performed simultaneously and continuously and the wefting operation forming the stress absorption loops on two lateral edges of the grid is performed with the aid of the weft thread (212).

6. Process according to claim 5, characterized in that a connecting cable is passed into the stress absorption loops and the covering films are not applied to the connecting cables.

7. Process according to claim 1, characterized in that there is a simultaneous and continuous production of the nonwoven reinforcement (10), the preheating and application of the covering films (16a, 16b), the nonwoven reinforcement being obtained by continuously carrying out a warping operation, a wefting operation and a welding operation of the warp (14) and weft (12) threads.

8. Process according to any one of the preceding claims, characterized in that the complex is cooled after applying the covering films.

9. Machine for producing a tight complex incorporating an inner reinforcement and two covering films for said reinforcement, comprising warping means (20) and wefting means (22) making it possible to form a nonwoven reinforcement having warp threads and weft threads arranged on two juxtaposed layers in the manner of a grid, complexing means (26) applying the covering films to the non-woven reinforcement with a predetermined force and at a complexing temperature, characterized in that it also comprises means (30a, 30b) for preheating the covering films (16a, 16b) to a thermoassembly temperature and in that the complexing means apply the films to the reinforcement with a predetermined force chosen such that the covering films penetrate between the warp threads and the weft threads without being completely traversed by these threads and at a complexing temperature below the thermoassembly temperature and at the most equal to the maximum temperature withstood by the threads, so that they maintain their strength characteristics.

10. Machine according to claim 9, characterized in that it comprises, upstream of the complexing means (26), means (36) for the continuous movement of the tight complex.

11. Machine according to claim 10, characterized in that it also comprises, between the complexing means (26) and the storage roller (38), means (34) for cooling the tight complex.

12. Machine according to any one of the claims 9 to 11, characterized in that the preheating means incorporate two heating drums (30a, 30b) and two regulatable return rollers (32a, 32b) making it possible to apply covering films to the zones of the heating drums forming in cross-section circular arcs of regulatable lengths.

13. Machine according to any one of the claims 9 to 12, characterized in that the complexing means incorporate two heating rollers (30a, 30b) and means for applying these heating rollers to one another with said predetermined pressure.

14. Machine according to claim 13, combined with claim 12, characterized in that the conveyor belts (40a, 40b) travel between each of the heating drums (30a, 30b) and the corresponding heating roller (28a, 28b) for supporting the covering films.

## Patentansprüche

1. Verfahren zur Herstellung einer dichten Verbundplane, gebildet durch eine interne Armierung und zwei Abdeckfolien der genannten Armierung, die folgenden Schritte umfassend:
- Herstellen einer nicht verwobenen Armierung (10), gebildet aus Kettfäden (14) und Schußfäden (12), angeordnet in zwei aneinanderliegenden Lagen nach Art eines Gitters;
- Andrücken der vorgewärmten Abdeckfolien gegen die nicht verwobene Armierung mit einer festgelegten Kraft und einer Verbundbildungstemperatur;
**dadurch gekennzeichnet**,
daß dem Schritt des Andrückens der Abdeckfolien gegen die Armierung ein Schritt des Vorwärmens der Abdeckfolien auf eine Thermoverbindungstemperatur vorausgeht, wobei besagte festgelegte Kraft so gewählt wird, daß die Abdeckfolien zwischen die Kettfäden und die Schußfäden eindringen, ohne vollständig von diesen Fäden durchquert bzw. durchdrungen zu werden, und die Verbundbildungstemperatur niedriger als die Thermoverbindungstemperatur und höchstens gleich einer von den Fäden ausgehaltenen Maximaltemperatur ist, damit sie ihre Zähigkeits- bzw. Festigkeitsleistungsfähigkeiten bewahren.

2. Verfahren nach Anspruch 1, dadurch gekennzeichnet, daß man die nichtverwobene Armierung (210) herstellt, indem man nacheinander eine Schußfaden-Operation mittels eines durchlaufenden Schußfadens (212) und eine Kettfaden-Operation mittels eines durchlaufenden Kettfadens (214) so ausführt, daß sich Schlingen für die Aufnahme der Zugkräfte bilden, an zwei Seitenrändern (B1, B2) des Gitters mit Hilfe des Schußfadens und an zwei Endrändern des Gitters mit Hilfe des Kettfadens.

3. Verfahren nach Anspruch 2, dadurch gekennzeichnet, daß man durch die Schlingen für die Aufnahme der Zugspannung an jedem der beiden Seitenränder und an jedem der beiden Endränder ein Verbindungskabel (C) der Verbundplane mit einer benachbarten Struktur zieht, und dadurch, daß die Abdeckfolien diese Verbindungskabel nicht abdecken.

4. Verfahren nach einem der Ansprüche 2 und 3, angewandt bei der Herstellung einer nicht rechtwinkligen Verbundplane, dadurch gekennzeichnet, daß man die Schuß-Operation ausführt, indem man den durchlaufenden Schußfaden (212) einhängt in seitliche Einhängelemente (260), verteilt über die Länge der Seitenränder (B1, B2) des Gitters; man dann die Kett-Operation ausführt, indem man den durchlaufenden Kettfaden (214) einhängt in Einhängelemente (265), in Querrichtung verteilt über eine Breite gleich der Breite eines Quersegments (E) der größten Breite der herzustellenden Verbundplane, wobei der Abstand zwischen diesem Quersegment und jedem der End-Einhängelemente angepaßt ist, um gleich der Endlänge des entsprechenden Strangs des Kettfadens in der herzustellenden Verbundplane zu sein; man dann die Stränge des Kettfadens (214) auf dem genannten Quersegment (E) der größten Breite fixiert und einem ersten Ende (P1) des Gitters seine endgültige Breite gibt, indem man die Stränge unter Spannung hält zwischen diesem ersten Ende und besagtem Quersegment; man dann die Stränge des Kettfadens (214) auf dem Quersegment (E) lockert bzw. freigibt; man schließlich die Abdeckfolien aufbringt, wobei man den Abstand der Stränge des Kettfadens moduliert bzw. anpaßt, ausgehend von dem ersten Ende, und indem man diese Stränge unter Spannung hält.

5. Verfahren nach Anspruch 1, dadurch gekennzeichnet, daß man die nicht verwobene Armierung (110) herstellt, indem man mit einem durchlaufenden Schußfaden (112) eine Schuß-Operation durchführt und dann mit einzelnen Kettfäden (214) die Kett-Operation, wobei die Kett-Operation und das Aufbringen der Abdeckfolie simultan und kontinuierlich erfolgen und die auf beiden Seiten des Gitters Schlingen für die Aufnahme der Zugkräfte bildende Schuß-Operation mit Hilfe des Schußfadens (212).

6. Verfahren nach Anspruch 5, dadurch gekennzeichnet, daß man durch die Schlingen zur Aufnahme der Zugspannung ein Verbindungskabel führt, und dadurch, daß die Abdeckfolien auf diese Verbindungskabel nicht aufgebracht werden.

7. Verfahren nach Anspruch 1, dadurch gekennzeichnet, daß man simultan und kontinuierlich die Herstellung der nicht verwobenen Armierung (10) und die Vorwärmung und Aufbringung der Abdeckfolien (16a, 16b) ausführt, wobei man die nichtverwobene Armierung erhält, indem man kontinuierlich eine Kett-Operation, eine Schußoperation und Verschweißungsoperation der Kettfäden (14) und der Schußfäden (12) ausführt.

8. Verfahren nach einem der vorangehenden Ansprüche, dadurch gekennzeichnet, daß man die Verbundplane nach dem Aufbringen der Abdeckfolien kühlt.

9. Maschine zur Herstellung einer dichten Verbundplane, eine interne Armierung enthaltend und zwei Abdeckfolien für die genannte Armierung, umfassend:
- Schär-Einrichtungen (20) und Schuß- Einrichtungen (22), um eine nichtverwobene Armierung zu bilden, die Kettfäden und Schußfäden umfaßt, angeordnet zu zwei aneinanderliegenden Schichten nach Art eines Gitters;
- Verbundbildungseinrichtungen (26), welche die vorgewärmten Abdeckfolien auf die nichtverwobene Armierung aufbringen, mit einer festgelegten Kraft und einer Verbundbildungstemperatur;
dadurch gekennzeichnet, daß sie außerdem umfaßt:
- Einrichtungen (30a, 30b) zum Vorwärmen der Abdeckfolien (16a, 16b) auf eine Thermoverbindungstemperatur;
und durch die Tatsache, daß die Verbundbildungseinrichtungen die Folien auf die Armierung mit einer festgelegten Kraft aufbringen, so gewählt, daß die Abdeckfolien zwischen die Kettfäden und die Schußfäden eindringen, ohne ganz von diesen Fäden durchquert bzw. durchdrungen zu werden, und dies mit einer Verbundbildungstemperatur, die niedriger als die Thermoverbindungstemperatur ist und höchstens gleich einer Maximaltemperatur, die diese Fäden aushalten, damit sie ihre Festigkeitsleistungsfahigkeit bewahren.

10. Maschine nach Anspruch 9, dadurch gekennzeichnet, daß sie, den Verbundbildungseinrichtungen (26) nachgeschaltet, kontinuierliche Fördereinrichtungen (36) der Verbundplane umfaßt.

11. Maschine nach Anspruch 10, dadurch gekennzeichnet, daß sie zwischen den Verbundbildungseinrichtungen (26) und der Lagerrolle (38) Einrichtungen (34) zum Kühlen der Verbundplane umfaßt.

12. Maschine nach einem der Ansprüche 9 bis 11, dadurch gekennzeichnet, daß die Vorwärmeinrichtungen zwei Aufwärmtrommeln enthalten (30a, 30b) und zwei verstellbare Umlenkrollen (32a, 32b), die ein Andrücken der Abdeckfolien gegen Zonen der Aufwärmtrommeln ermöglichen, die im Querschnitt Kreisbögen einstellbarer Länge bilden.

13. Maschine nach einem der Ansprüche 9 bis 12, dadurch gekennzeichnet, daß die Verbundbildungseinrichtungen zwei Aufwärmrollen (28a, 28b) umfassen und Einrichtungen zum Gegeneinanderdrücken dieser Aufwärmrollen mit besagtem festgelegtem Druck.

14. Maschine nach Anspruch 13, kombiniert mit Anspruch 12, dadurch gekennzeichnet, daß Förderbänder (40a, 40b) über jede der Aufwärmtrommeln (30a, 30b) und die entsprechende Aufwärmrolle (28a, 28b) laufen, um die Abdeckfolien zu tragen bzw. zu stützen.
